# FASCICULE DE BREVET EUROPEEN

(11) **EP 1 396 335 B1**
(45) Date de publication et mention de la délivrance du brevet: **02.05.2007**
(21) Numéro de dépôt: 03360101.4
(22) Date de dépôt: 04.09.2003
(51) Int. Cl.: B30B 9/26, B30B 9/22, B65D 90/58, F16J 13/22

(54) **Dispositif de porte pour contenant sous pression et contenant comportant un tel dispositif**
Verschlussvorrichtung für einen Druckbehälter und Behälter mit einer solchen Vorrichtung
Closing device for a pressure container and container with such a device

(30) Priorité: 06.09.2002 FR 0211073
(43) Date de publication de la demande: 10.03.2004
(73) Titulaire: Bucher Vaslin, 49290 Chalonnes sur Loire (FR)
(72) Inventeur: Baranger, Alain, 49120 La Chapelle Rousselin (FR); Pajot, Hervé, 49000 Angers (FR); Godart, Luc, 49360 Toutlemonde (FR)
(74) Mandataire: Nuss, Pierre

(56) Documents cités:
- EP-A- 0 516 570
- DE-A- 3 317 127
- DE-A- 3 334 140
- DE-C- 137 914
- DE-U- 8 211 721

## Description

La présente invention concerne le domaine des fermetures de contenants, notamment le domaine des cuves sous pression, et plus particulièrement des moyens d'ouverture et de fermeture de cuves de pressoirs pneumatiques.

L'invention a pour objet un dispositif de porte pour contenant et un contenant comportant au moins un tel dispositif.

La réalisation d'une ouverture dans un contenant tel qu'une cuve cylindrique est une rupture dans la continuité de la peau, se traduisant par une concentration de contraintes aux points de reprise des efforts de l'ouverture par la porte. Les points de liaisons entre la porte et la cuve seront de ce fait fortement sollicités et constituent de ce fait des points faibles sujets à rupture préférentielle, limitant les pressions appliquées.

Les inventeurs ont pu procéder dans la pratique à différentes observations et déductions dans le contexte précité.

Ainsi, toute ouverture dans une cuve soumise à la pression provoque son effondrement et toute déformation liée aux rattrapages des jeux engendre une modification de la géométrie initiale de la cuve, c'est-à-dire perte de la cylindricité. Ces déformations sont à l'origine des concentrations de contrainte préjudiciables à la tenue de la cuve et à la résistance en fatigue.

Le document EP-A-0 516 570 divulgue un pressoir pneumatique comportant des portes de chargement et d'évacuation sous la forme de portes coulissantes associées à des paires de barres de guidage.

De nombreux dispositifs de fermeture de portes de cuves (ou contenants) sont connus et utilisés. Ils comportent des glissières, des barres de guidage, des renforts, des verrous qui reprennent localement ou ponctuellement les efforts de liaison entre la porte et la cuve. Ces efforts localisés sont concentrés et imposent des dimensionnements relativement importants, donc coûteux.

L'invention a notamment pour but de pallier les inconvénients précités. Elle a également pour but de fournir une structure de porte simple et d'un prix de revient bas, tout en évitant autant que possible la formation d'une discontinuité structurelle et d'un point faible.

A cet effet, l'invention a pour objet un dispositif de porte pour contenant selon la revendication 1.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
La figure 1 est une vue en perspective d'un dispositif de porte à l'état fermé, selon une première variante d'un premier mode de réalisation ;

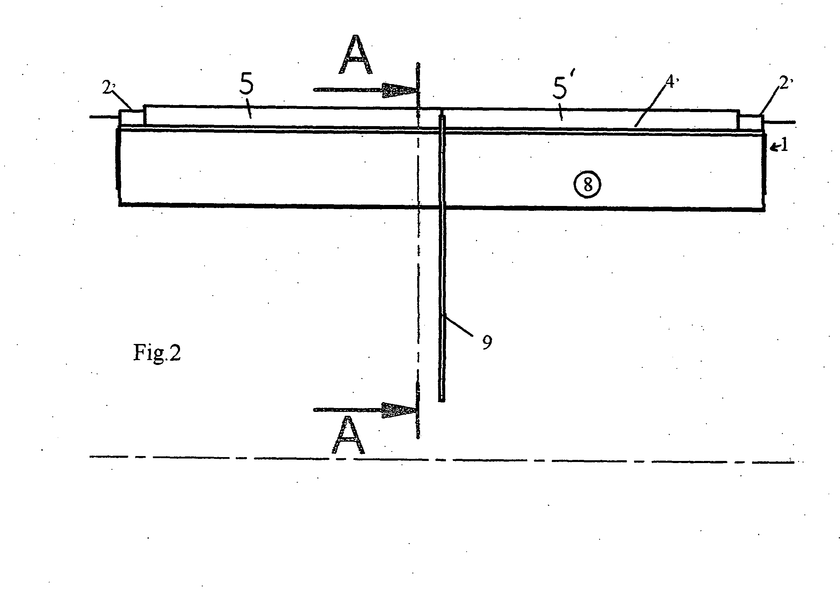

La figure 2 est une vue en élévation latérale du dispositif de porte de la figure 1 ;
La figure 3 est une vue en coupe selon A-A du dispositif représenté sur la figure 2 ;
La figure 4 est une vue à une échelle différente du détail B de la figure 3 ;
La figure 5 est une vue en élévation latérale et à une échelle différente d'un détail de la figure 1 ;
La figure 6 est une vue en élévation latérale d'un dispositif de porte selon une seconde variante d'un premier mode de réalisation de l'invention ;
La figure 7 est une vue à une échelle différente du détail C de la figure 6 ;
La figure 8 est une vue en coupe à une échelle différente d'une liaison coulissante entre un élément profilé formant glissière et une structure profilée rapportée sur un élément en forme de plaque, selon un second mode de réalisation de l'invention ;
La figure 9 est une vue en perspective d'un panneau de porte formé de plusieurs éléments en forme de plaque et faisant partie d'un dispositif de porte selon l'invention ;
La figure 10 est une vue similaire à celle de la figure 4, selon une autre variante de réalisation de l'invention ;
La figure 11A est une vue en perspective partielle d'un dispositif de porte selon une autre variante de l'invention, comportant deux éléments en forme de plaque ;
La figure 11B est une vue en coupe à une échelle différente du détail E de la figure 11A, et,
Les figures 12A et 12B sont des vues en coupe partielles montrant deux alternatives de réalisation selon l'invention de la liaison par glissière entre le ou les panneaux de porte et l'enveloppe du contenant.

Comme le montrent les figures des dessins annexés, le dispositif de porte 1 est principalement constitué, d'une part, par deux éléments profilés 4 et 4' rectilignes et parallèles entre eux, fixés ou formés sur la face externe de l'enveloppe de part et d'autre de l'ouverture 3 ou au niveau des bords de cette dernière et, d'autre part, par au moins un élément en forme de plaque 5, 5' présentant une courbure proche de celle de la partie 2' de l'enveloppe 2 comportant l'ouverture 3 et comprenant deux bords opposés 6 et 6' pourvus chacun d'une structure profilée longitudinale 7, parallèles entre elles, dont la section permet un accrochage ou une rétention dans l'un desdits éléments profilés 4, 4' et autorise un coulissement continu guidé dans ce dernier, ces éléments creux 4, 4' formant ainsi moyens de solidarisation et glissières sur toute la longueur pour ledit ou lesdits élément(s) 5, 5' en forme de plaque(s) et assurant son (leur) guidage entre une position de fermeture ou d'obturation de l'ouverture 3 et une position de dégagement ou de libération (préférentiellement totale) de cette dernière.

Ainsi, l'invention se propose par une reprise continue des efforts sur la totalité de la longueur de l'ouverture, de diluer et de répartir ces efforts, ce qui permet de diminuer considérablement le dimensionnement du dispositif de fermeture des portes et de le simplifier structurellement.

Selon une première caractéristique de l'invention, l'élément ou chaque élément cintré en forme de plaque 5, 5' est au moins légèrement déformable sous pression et peut présenter au moins deux états correspondant à deux rayons de courbures différents, le plus grand des deux rayons de courbure autorisant un déplacement en translation de l'élément 5, 5' concerné et le plus petit des deux rayons de courbure assurant un blocage en position dudit élément 5, 5' concerné, le plus petit des deux rayons de courbure étant au moins légèrement supérieur au rayon de courbure de la partie 2' de l'enveloppe comportant l'ouverture 3.

Conformément à une première possibilité de réalisation de l'invention, permettant d'éviter toute déformation lors de la montée en pression dans le contenant, l'élément ou chaque élément en forme de plaque 5, 5' est monté sans jeu et sous tension dans ou sur les éléments profilés 4 et 4' formant glissières, de telle manière qu'une déformation de cet élément 5, 5', entraînant un agrandissement de son rayon de courbure, est nécessaire pour permettre son déplacement par coulissement, ledit élément 5, 5' n'étant sensiblement pas déformé lors de la mise sous pression du contenant.

En variante et conformément à une autre possibilité de réalisation de l'invention, l'élément ou chaque élément en forme de plaque 5, 5' est monté avec jeu et en étant libre de coulisser dans les éléments profilés 4, 4' formant glissières, la mise sous pression du contenant entraînant une déformation dudit ou desdits élément(s) 5, 5' avec un amoindrissement de son rayon de courbure et un blocage en translation par rapport auxdits éléments profilés 4 et 4'.

Le jeu de montage du ou des élément(s) 5, 5' formant la porte correspond au jeu nécessaire à son fonctionnement (coulissement), et c'est lors de la mise sous pression que les jeux vont être rattrapés par le changement de courbure de la porte (éléments 5, 5'). Dans ce cas, le rayon de courbure de la porte au repos (avec du jeu) est supérieur à celui de la porte en position tendue, c'est-à-dire porte au contact de la glissière et jeux supprimés. Dans ce principe, c'est la pression exercée dans le contenant qui modifie le rayon de courbure de la porte. Le résultat final est le même que dans le premier cas précité, à savoir que le rayon de courbure de la porte est toujours supérieur à celui de la cuve.

En fait, dans les deux cas mentionnés ci-dessus, il y a uniquement deux positions pour la porte (élément 5 ou éléments 5, 5'), à savoir :
- une position en contact avec jeu avec un grand rayon de courbure
- une position tendue (ou sans jeu) avec un rayon de courbure de travail : proche de celui de la virole mais toujours supérieur.

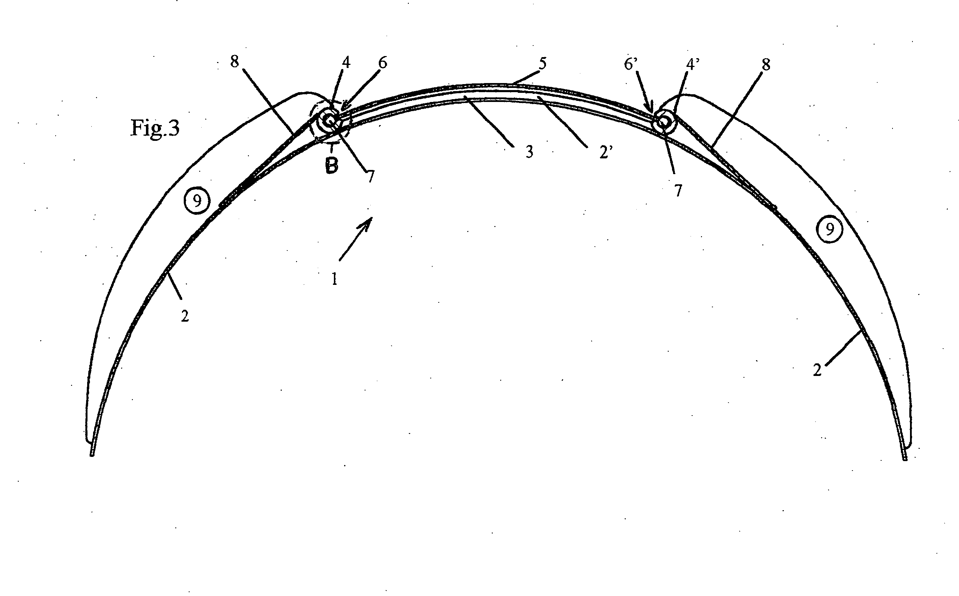

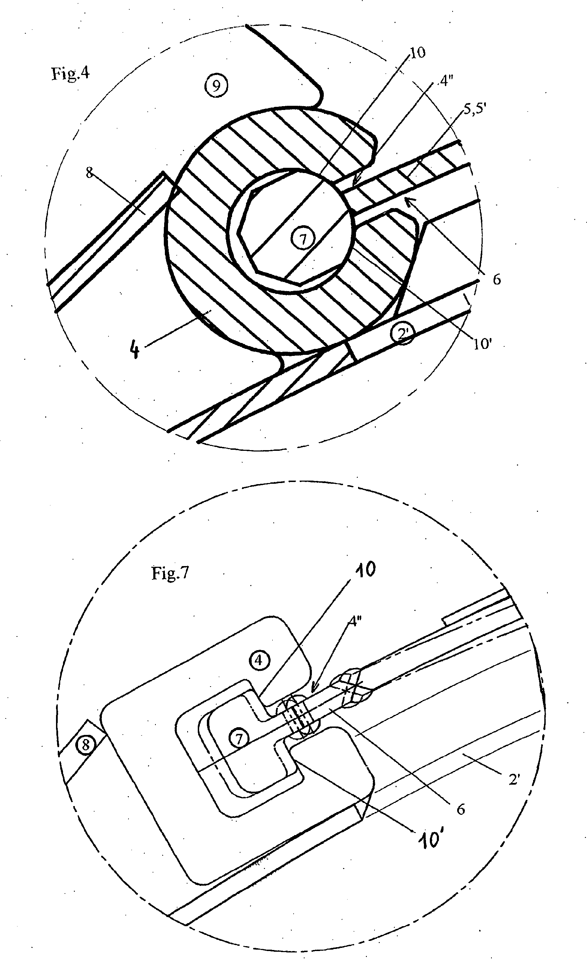

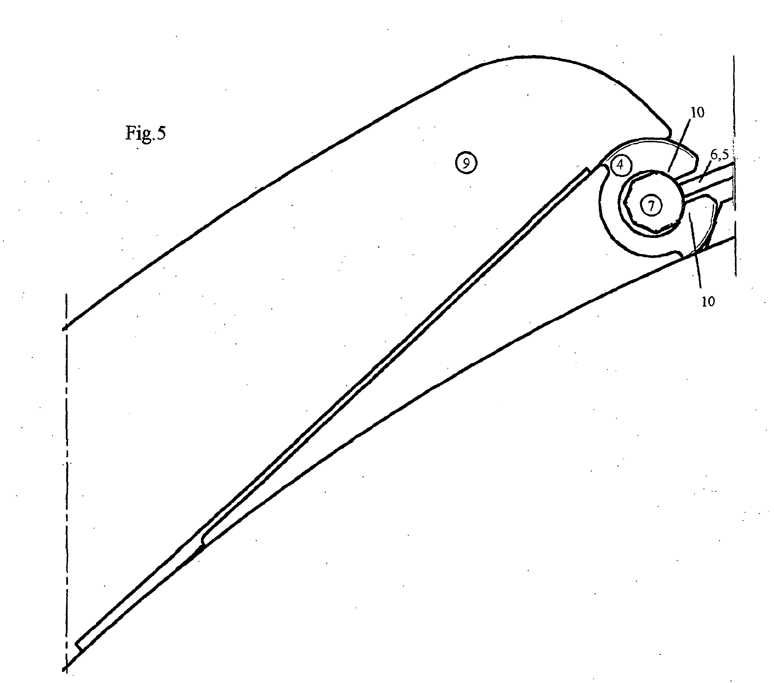

De manière tout à fait préférée, et comme le montrent les figures 3, 4, 5, 6, 8 et 10, les liaisons entre structure longitudinale profilée 7 et élément profilé 4, 4' respectif sont configurées de telle manière que les décrochements résultant entre les bords de l'ouverture 3 et les bords 6, 6' du ou des éléments en forme de plaque 5, 5' mutuellement en regard présentent une faible hauteur.

La proximité des peaux de porte et de contenant (voir notamment figure 3) atténue la discontinuité et le niveau des contraintes et déformations correspondantes. Il en est de même pour la position des points de reprise des efforts. En effet, plus la géométrie de la porte sera proche de la géométrie de la partie du contenant qui la reçoit, plus les contraintes et déformations seront faibles.

De plus, la multiplication des points de reprise des efforts entre la porte et l'enveloppe du contenant permet d'atténuer le niveau de contrainte en chacun de ces points, et de ce fait de les dimensionner au plus juste, réduisant ainsi la distance entre porte et contenant.

La reprise des efforts réalisée par le principe précité, permet de réduire le dispositif de porte à sa plus simple expression : une simple plaque (ou plusieurs) de courbure voisine à celle de la virole de la partie 2' de l'enveloppe du contenant suffit. En effet, le principe de glissière permet de faire travailler le contenant et la porte en membrane, c'est-à-dire en tension et non en flexion.

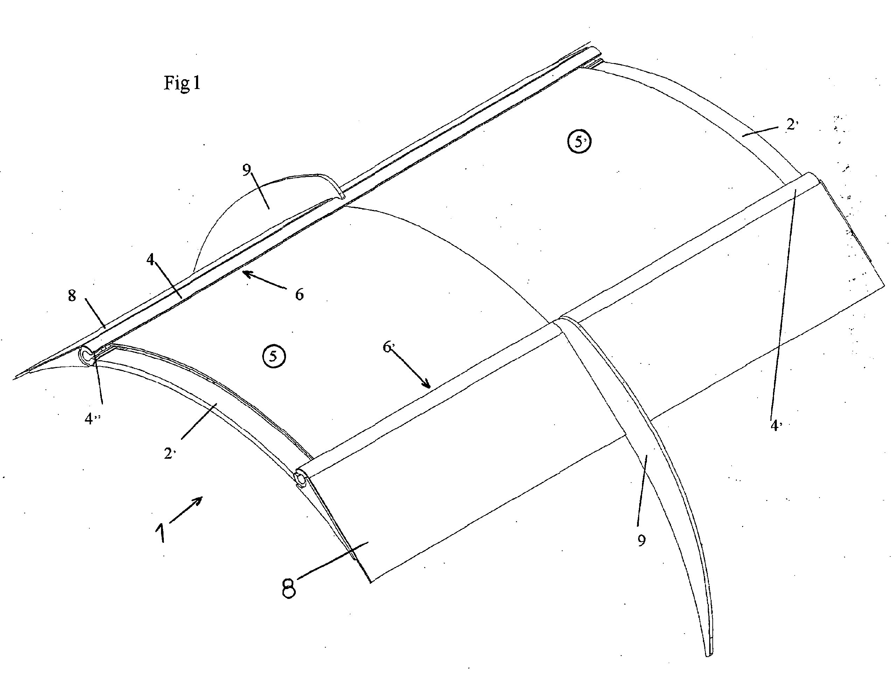

Selon une premier mode de réalisation de l'invention, représenté aux figures 1, 3, 4 à 7 et 12 des dessins annexés, chaque liaison coulissante [structure profilée 7 / élément profilé 4, 4'] consiste en une liaison du type profilé plein ou enveloppé coulissant dans un profilé creux ou enveloppant muni d'une fente longitudinale 4".

Comme le montrent les figures précitées, les profilés pleins, formés d'un seul tenant avec l'élément en forme de plaque ou l'enveloppe ou rapportés par soudage sur l'un de ces derniers (en fonction de la variante retenue), sont en contact surfacique intime avec des portions longitudinales 10, 10' des faces internes des parois des profilés creux s'étendant de part et d'autre de leurs fentes 4" longitudinales respectives, lorsque l'élément en forme de plaque 5, 5' concerné présente son rayon de courbure le plus faible.

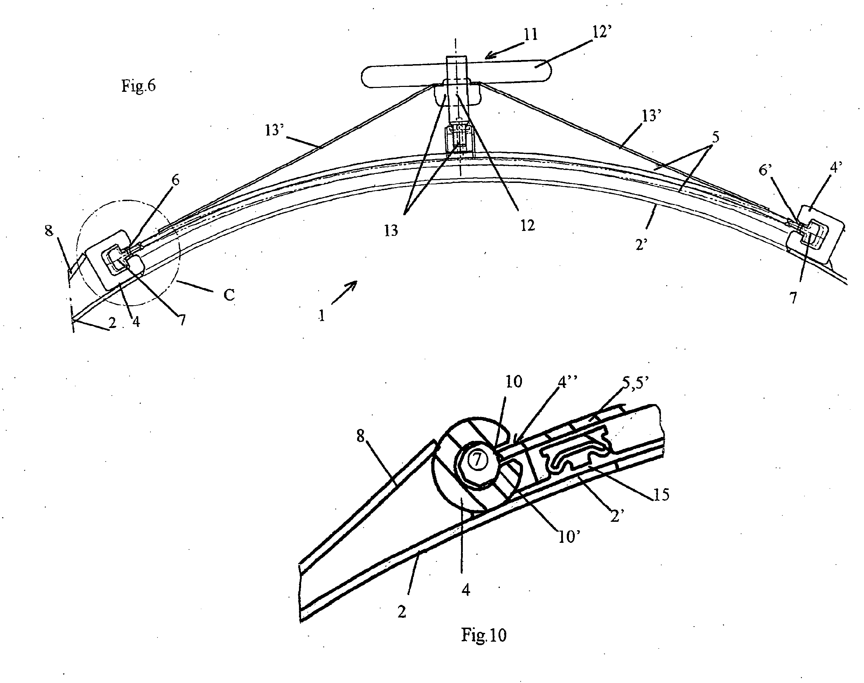

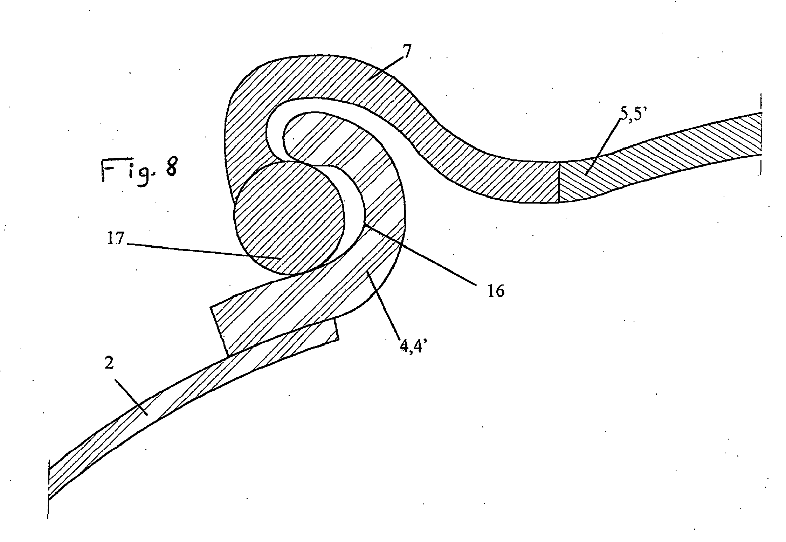

Les zones de contact surfaciques présenteront des formes dépendant de celles des profilés creux et des profilés pleins ou épaississements en contact, c'est-à-dire par exemple planes (figures 6 et 7) ou partiellement cylindriques circulaires (figures 3 à 5 et 12).

Dans ce dernier cas, la cylindricité et la concentricité des profilés en contact permet un ajustement, lors de la mise en pression, de la porte par rapport à la cuve. Ce système autorise de légères rotations de la porte sur le contenant ou la cuve de façon à travailler en membrane.

Les ouvertures des fentes 4" des profilés creux sont sensiblement dirigées l'une vers l'autre ou l'une à l'opposé de l'autre selon des plans parallèles aux plans tangents à l'enveloppe 2 aux endroits de fixation desdits profilés 4, 4'.

Le déplacement du ou des éléments 5, 5' ne pourra ainsi être réalisé qu'après décollement des zones de surface en contact des profilés pleins ou épaississements des portions de faces internes 10 et 10' par modification du rayon de courbure du ou des éléments 5, 5'.

Cette modification pourra éventuellement être réalisée par un moyen externe indépendant, par la modification de la pression interne du contenant ou par un moyen rapporté par le dispositif de porte 1.

De manière pratique, les éléments profilés 4 et 4' peuvent consister en des profilés creux comportant chacun une ouverture longitudinale en forme de fente 4" et être rapportés directement sur la face externe de l'enveloppe 2 du contenant, en étant fixés par exemple par soudage, et les structures profilées parallèles 7 peuvent consister en des épaississements des bords 6, 6' de chaque élément 5 en forme de plaque (figures 1, 4, 5, 6, 7 et 12A).

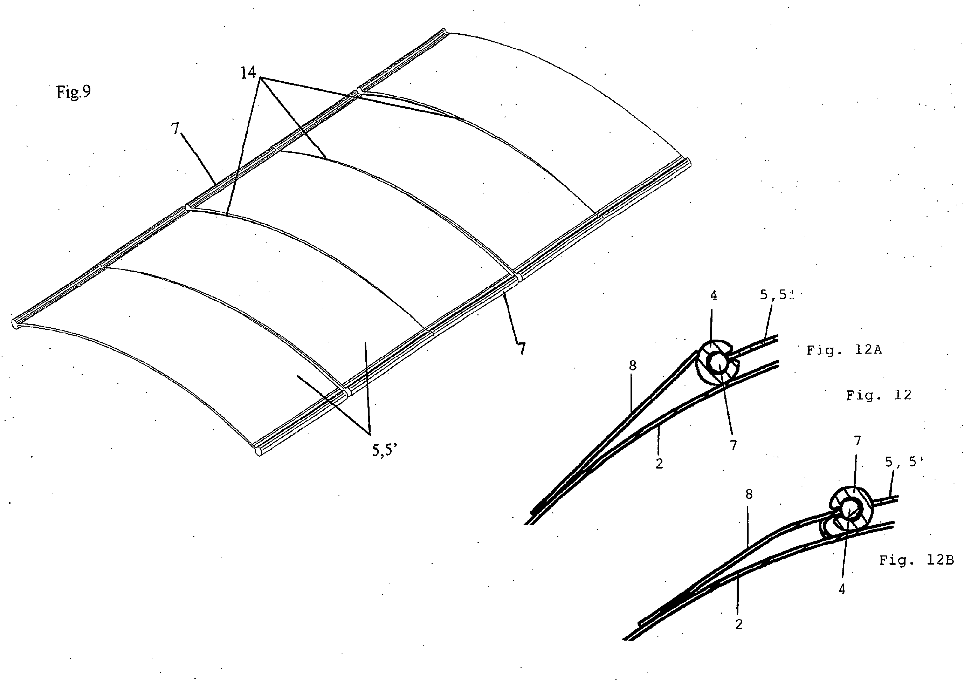

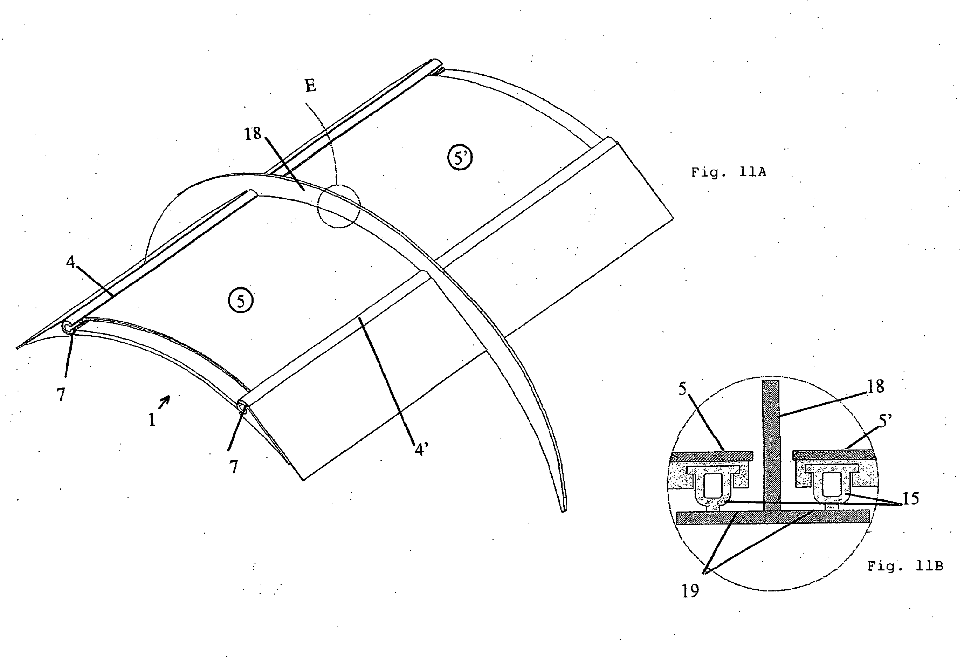

En variante, il peut également être prévu que les éléments profilés 4, 4' consistent en des épaississements ou des profilés pleins rapportés ou formés au niveau de bords opposés de l'ouverture 3 et en ce que les structures profilées parallèles 7 consistent en des profilés creux comportant chacun une ouverture longitudinale en forme de fente 4", formés ou rapportés sur les bords 6, 6' respectifs (figures 10 et 12B).

Selon un second mode de réalisation de l'invention, représenté de manière schématique sur la figure 8 des dessins annexés, les éléments profilés 4, 4' et les structures profilées 7 peuvent présenter en coupe transversale des sections en forme de crochets, aptes à venir en prise l'un dans l'autre, l'un des crochets délimitant une rainure 16 qui reçoit l'extrémité de l'autre crochet, éventuellement pourvue d'un épaississement 17.

Pour renforcer la résistance à l'arrachement des éléments profilés 4, 4' tout en répartissant les efforts sur une surface plus importante de l'enveloppe 2, chaque élément profilé 4, 4' peut être relié à l'enveloppe 2 par un élément de liaison longitudinal 8, tel que par exemple une bande ou une plaque allongée, et, le cas échéant, par au moins une pièce de reprise d'efforts 9, s'étendant dans un plan sensiblement perpendiculaire à la direction longitudinale de l'élément profil considéré 4, 4' et relié à l'enveloppe 2 sur une partie de son pourtour.

Comme déjà indiqué précédemment, lorsque l'élément ou les éléments 5, 5' en forme de plaque est (sont) monté(s) sans jeu et avec blocage en translation dans les éléments profilés 4, 4' formant glissières, la modification de la courbure permettant le déplacement en coulissement peut être obtenue par l'intermédiaire de différents moyens.

Toutefois, de manière préférée, et comme le montre la figure 6, chaque élément en forme de plaque 5, 5' porte sur sa face externe un dispositif 11 de déformation contrôlée de sa courbure, dont l'action sur ledit élément 5, 5' entraîne un écartement de ses deux bords opposés parallèles 6 et 6'.

Selon une possibilité de réalisation avantageuse, le ou chaque dispositif de déformation 11 comprend un organe d'appui 12 déplaçable perpendiculairement à un plan tangent à l'élément cintré 5, 5' en forme de plaque concerné et monté dans une structure 13 de support et de guidage appliquée contre ledit élément 5, 5' en forme de plaque par des éléments de reprise d'efforts symétriques 13, fixés sur l'élément concerné 5, 5' à proximité de ses bords latéraux opposés parallèles 6 et 6', l'organe d'appui 12 étant solidaire d'un organe de manoeuvre 12' permettant également le déplacement par coulissement de l'élément 5, 5' concerné.

L'organe de manoeuvre 12' pourra par exemple consister en une poignée rotative, l'organe d'appui 12 se présentant sous la forme d'une tige filetée montée dans une douille filetée faisant partie de la structure de support et de guidage 13.

Préférentiellement, le contenant présente une structure cylindrique à section circulaire, son enveloppe 2 et le ou les élément(s) cintré(s) 5, 5' en forme de plaque sont réalisés en tôle métallique, préférentiellement en tôle d'acier inoxydable et l'ouverture 3 présente avantageusement une forme sensiblement rectangulaire.

L'élément d'obturation de l'ouverture 3 (le panneau de la porte) pourra également être décliné en plusieurs versions.

Ainsi, le dispositif de porte 1 peut comporter un unique élément 5 en forme de plaque réalisée d'un seul tenant.

En première solution alternative, représentée sur la figure 9, le dispositif de porte 1 peut comporter un unique élément 5 en forme de plaque, constituée de plusieurs parties adjacentes en tôle métallique reliées entre elles par des liaisons souples 14, préférentiellement étanches, par exemple sous forme de portions de bandes en un matériau synthétique flexible. Ces liaisons souples permettent de rattraper les jeux de construction et de montage.

En seconde solution alternative, et comme le montre la figure 1 des dessins annexés, le dispositif de porte 1 peut comporter deux éléments 5 et 5' en forme de plaques cintrées indépendantes, dont les bords mutuellement adjacents en position d'obturation de l'ouverture 3 comportent éventuellement des dispositifs d'étanchéité, le cas échéant mutuellement coopérants.

L'invention a également pour objet un contenant, notamment cuve de pressoir pneumatique, caractérisé en ce qu'il comprend un dispositif de porte 1 tel que décrit ci-dessus.

Lorsque les éléments profilés 4, 4' sont disposés en retrait par rapport aux bords opposés de l'enveloppe 2 définissant en partie l'ouverture 3, la face des bords 6, 6' du ou des élément(s) en forme de plaque 5, 5' située en regard de la partie d'enveloppe 2' peut être pourvue d'une garniture d'étanchéité 15, préférentiellement gonflable, s'étendant sur tout le pourtour de l'élément 5, 5' concerné.

En variante, il peut aussi être prévu que la partie d'enveloppe 2' comportant ladite ouverture 3 soit munie d'une garniture d'étanchéité, préférentiellement gonflable, s'étendant autour de ladite ouverture 3.

Lorsque le dispositif de porte 1 est constitué de deux éléments en forme de plaque 5 et 5', l'ouverture 3 peut être pourvue d'une traverse médiane 18, par exemple à section en T, fournissant des surfaces d'appui 19 aux dispositifs adjacents en position obturée des éléments 5 et 5', par exemple sous forme de portion de garniture d'étanchéité gonflable 15 (figures 11A et 11B).

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de porte pour contenant, préférentiellement de forme cylindrique, comprenant au moins une partie d'enveloppe à section courbe ou cintrée, et une ouverture ménagée dans cette partie et destinée à être obturée par ledit dispositif de porte, ce dispositif (1) étant principalement constitué, d'une part, par deux éléments profilés (4 et 4') rectilignes et parallèles entre eux, fixés ou formés sur la face externe de l'enveloppe de part et d'autre de l'ouverture (3) ou au niveau des bords de cette dernière et, d'autre part, par au moins un élément en forme de plaque (5, 5') présentant une courbure proche de celle de la partie (2') de l'enveloppe (2) comportant l'ouverture (3) et comprenant deux bords opposés (6 et 6') pourvus chacun d'une structure profilée longitudinale (7), dont la section permet un accrochage ou une rétention dans l'un desdits éléments profilés (4, 4') et autorise un coulissement continu dans ce dernier, ces éléments profilés (4, 4') formant ainsi moyens de solidarisation et glissières sur toute la longueur pour ledit ou lesdits élément(s) (5, 5') en forme de plaque(s) et assurant son (leur) guidage entre une position de fermeture de l'ouverture (3) et une position de dégagement ou de libération de cette dernière,
dispositif de porte (1) **caractérisé en ce que** l'élément ou chaque élément cintré en forme de plaque (5, 5') est au moins légèrement déformable sous pression et peut présenter au moins deux états correspondant à deux rayons de courbures différents, le plus grand des deux rayons de courbure autorisant un déplacement en translation de l'élément (5, 5') concerné et le plus petit des deux rayons de courbure assurant un blocage en position dudit élément (5, 5') concerné, le plus petit des deux rayons de courbure étant au moins légèrement supérieur au rayon de courbure de la partie (2') de l'enveloppe comportant l'ouverture (3).

2. Dispositif de porte selon la revendication 1, **caractérisé en ce que** l'élément ou chaque élément en forme de plaque (5, 5') est monté sans jeu et sous tension dans ou sur les éléments profilés (4 et 4') formant glissières, de telle manière qu'une déformation de cet élément (5, 5'), entraînant un agrandissement de son rayon de courbure, est nécessaire pour permettre son déplacement par coulissement, ledit élément (5, 5') n'étant sensiblement pas déformé lors de la mise sous pression du contenant.

3. Dispositif de porte selon le revendication 1, **caractérisé en ce que** l'élément ou chaque élément en forme de plaque (5, 5') est monté avec jeu et en étant libre de coulisser dans les éléments profilés (4, 4') formant glissières, la mise sous pression du contenant entraînant une déformation dudit ou desdits élément(s) (5, 5') avec un amoindrissement de son rayon de courbure et un blocage en translation par rapport auxdits éléments profilés (4 et 4').

4. Dispositif de porte selon l'une quelconque des revendications 1 à 3, **caractérisé en ce que** les liaisons entre structure longitudinale profilée (7) et élément profilé (4, 4') respectif sont configurées de telle manière que les décrochements résultant entre les bords de l'ouverture (3) et les bords (6, 6') du ou des éléments en forme de plaque (5, 5') mutuellement en regard présentent une faible hauteur.

5. Dispositif de porte selon l'une quelconque des revendications 1 à 4 **caractérisé en ce que** chaque liaison coulissante [structure profilée (7) / élément profilé (4, 4')] consiste en une liaison du type profilé plein ou enveloppé coulissant dans un profilé creux ou enveloppant muni d'une fente longitudinale (4").

6. Dispositif de porte selon la revendication 5, **caractérisé en ce que** les profilés pleins, formés d'un seul tenant avec l'élément en forme de plaque ou l'enveloppe ou rapportés par soudage, sont en contact surfacique intime avec des portions longitudinales (10, 10') des faces internes des parois des profilés creux s'étendant de part et d'autre de leurs fentes (4") longitudinales respectives, lorsque l'élément en forme de plaque (5, 5') concerné présente son rayon de courbure le plus faible.

7. Dispositif de porte selon la revendication 5 ou 6, **caractérisé en ce que** les éléments profilés (4 et 4') consistent en des profilés creux comportant chacun une ouverture longitudinale en forme de fente (4") et sont rapportés directement sur la face externe de l'enveloppe (2) du contenant, en étant fixés par exemple par soudage, et **en ce que** les structures profilées parallèles (7) consistent en des épaississements des bords (6, 6') de chaque élément (5) en forme de plaque.

8. Dispositif de porte selon la revendication 5 ou 6, **caractérisé en ce que** les éléments profilés (4, 4') consistent en des épaississements ou des profilés pleins rapportés ou formés au niveau de bords opposés de l'ouverture (3) et **en ce que** les structures profilées parallèles (7) consistent en des profilés creux comportant chacun une ouverture longitudinale en forme de fente (4"), formés ou rapportés sur les bords (6, 6') respectifs.

9. Dispositif de porte selon l'une quelconque des revendications 1 à 4, **caractérisé en ce que** les éléments profilés (4, 4') et les structures profilées (7) présentent en coupe transversale des sections en forme de crochets, aptes à venir en prise l'un dans l'autre, l'un des crochets délimitant une rainure (16) qui reçoit l'extrémité de l'autre crochet, éventuellement pourvue d'un épaississement (17).

10. Dispositif de porte selon l'une quelconque des revendications 1 à 9, **caractérisé en ce que** chaque élément profilé (4, 4') est relié à l'enveloppe (2) par un élément de liaison longitudinal (8), tel que par exemple une bande ou une plaque alllongée, et, le cas échéant, par au moins une pièce de reprise d'efforts (9), s'étendant dans un plan sensiblement perpendiculaire à la direction longitudinale de l'élément profil considéré (4, 4') et relié à l'enveloppe (2) sur une partie de son pourtour.

11. Dispositif de porte selon la revendication 2 et l'une quelconque des revendications 4 à 10, **caractérisé en ce que** chaque élément en forme de plaque (5, 5') porte sur sa face externe un dispositif (11) de déformation contrôlée de sa courbure, dont l'action sur ledit élément (5, 5') entraîne un écartement de ses deux bords opposés parallèles (6 et 6').

12. Dispositif de porte selon la revendication 11, **caractérisé en ce que** le dispositif de déformation (11) comprend un organe d'appui (12) déplaçable perpendiculairement à un plan tangent à l'élément cintré (5, 5') en forme de plaque concerné et monté dans une structure (13) de support et de guidage appliquée contre ledit élément (5, 5') en forme de plaque par des éléments de reprise d'efforts symétriques (13), fixés sur l'élément concerné (5, 5') à proximité de ses bords latéraux opposés parallèles (6 et 6'), l'organe d'appui (12) étant solidaire d'un organe de manoeuvre (12') permettant également le déplacement par coulissement de l'élément (5, 5') concerné.

13. Dispositif de porte selon l'une quelconque des revendications 1 à 12, **caractérisé en ce que** le contenant présente une structure cylindrique à section circulaire, **en ce que** son enveloppe (2) et le ou les élément(s) cintré(s) (5, 5') en forme de plaque sont réalisés en tôle métallique, préférentiellement en tôle d'acier inoxydable, et **en ce que** l'ouverture (3) présente une forme sensiblement rectangulaire.

14. Dispositif de porte selon l'une quelconque des revendications 1 à 13, **caractérisé en ce qu**'il comporte un unique élément (5) en forme de plaque réalisée d'un seul tenant.

15. Dispositif de porte selon l'une quelconque des revendications 1 à 13, **caractérisé en ce qu**'il comporte un unique élément (5) en forme de plaque, constituée de plusieurs parties adjacentes en tôle métallique reliées entre elles par des liaisons souples (14), préférentiellement étanches, par exemple sous forme de portions de bandes en un matériau synthétique flexible.

16. Dispositif de porte selon l'une quelconque des revendications 1 à 13, **caractérisé en ce qu**'il comporte deux éléments (5 et 5') en forme de plaques cintrées indépendantes, dont les bords mutuellement adjacents en position d'obturation de l'ouverture (3) comportent éventuellement des dispositifs d'étanchéité, le cas échéant mutuellement coopérants.

17. Contenant, notamment cuve de pressoir pneumatique, **caractérisé en ce qu**'il comprend un dispositif de porte (1) selon l'une quelconque des revendications 1 à 16

18. Contenant selon la revendication 17, **caractérisé en ce que** les éléments profilés (4, 4') sont disposés en retrait par rapport aux bords opposés de l'enveloppe (2) définissant en partie l'ouverture (3), la face des bords (6, 6') du ou des élément(s) en forme de plaque (5, 5') située en regard de la partie d'enveloppe (2') étant pourvue d'une garniture d'étanchéité (15), préférentiellement gonflable, s'étendant sur tout le pourtour de l'élément (5, 5') concerné.

19. Contenant selon la revendication 17 **caractérisé en ce que** les éléments profilés (4, 4') sont disposés en retrait par rapport aux bords opposés de l'enveloppe (2) définissant en partie l'ouverture (3), la partie d'enveloppe (2') comportant ladite ouverture (3) étant munie d'une garniture d'étanchéité, préférentiellement gonflable, s'étendant autour de ladite ouverture (3).

20. Contenant selon la revendication 18, **caractérisé en ce que** lorsque le dispositif de porte (1) est constitué de deux éléments en forme de plaque (5 et 5'), l'ouverture (3) est pourvue d'une traverse médiane (18), par exemple à section en T, fournissant des surfaces d'appui (19) aux dispositifs d'étanchéité adjacents en position obturée des éléments (5 et 5'), par exemple sous forme de portions de garnitures d'étanchéité gonflables (15).

## Claims

1. Closing device for a container, preferably of cylindrical shape, comprising at least one shell portion of curved or arched section and an opening made in this portion and designed to be closed by the said closing device, the device (1) consisting mainly, on the one hand, of two rectilinear profiled elements (4 and 4') parallel to one another fixed or formed on the outer face of the shell on either side of the opening (3) or at the level of the edges of the latter and, on the other hand, of at least one plate-shaped element (5, 5') with a curvature approximately that of the portion (2') of the shell (2) comprising the opening (3), and comprising two opposed edges (6 and 6') each provided with a longitudinal profiled structure (7) whose section enables it to be engaged or retained in one of the said profiled elements (4, 4') and allows unimpeded sliding along the latter, the profiled elements (4, 4') thus forming attachment and sliding means along their full length for the said plate-shaped element(s) (5, 5') and enabling it/them to be guided between a position where the opening (3) is closed and a position where the opening is opened or clear, the said closing device (1) being **characterised in that** the, or each, plate-shaped curved element (5, 5') is at least slightly deformable under pressure and can be in at least two conditions that correspond to two radii of curvature which allow translational displacement of the element (5, 5') concerned, the smaller of the two radii of curvature being at least slightly larger than the radius of curvature of the portion (2') of the shell comprising the opening (3).

2. Closing device (1) according to Claim 1, **characterised in that** the, or each, plate-shaped curved element (5, 5') is mounted with no play and under stress in or on the profiled elements (4 and 4') that form slideways, in such manner that a deformation of the element (5, 5') which increases its radius of curvature is needed to enable it to be moved by sliding, the said element (5, 5') not being appreciably deformed when the container is pressurised.

3. Closing device according to Claim 1, **characterised in that** the, or each, plate-shaped element (5, 5') is mounted with some play and is free to slide in the profiled element (4, 4') that form slideways, and pressurisation of the container brings about a deformation of the said element(s) (5, 5') that reduces its/their radius of curvature and blocks its/their translational movement relative to the said profiled elements (4 and 4').

4. Closing device according to any of Claims 1 to 3, **characterised in that** the connections between the longitudinal profiled structure (7) and the respective profiled element (4, 4') are configured in such manner that the resulting clearances between the edges of the opening (3) and the edges (6, 6') of the plate-shaped element(s) opposite one another are small.

5. Closing device according to any of Claims 1 to 4, **characterised in that** each sliding connection [profiled structure (7) / profiled element (4, 4')] consists of a connection of the full or enveloped profile type which slides in a hollow or enveloping section provided with a longitudinal slot (4").

6. Closing device according to Claim 5, **characterised in that** the full sections, formed integrally with the plate-shaped element or the shell or attached thereto by welding, are in intimate surface contact with longitudinal portions (10, 10') of the inner faces of the walls of the hollow sections that extend on either side of their respective longitudinal slots (4") when the plate-shaped element (5, 5') concerned has its smallest radius of curvature.

7. Closing device according to Claims 5 or 6, **characterised in that** the profiled elements (4, 4') consist of hollow sections each having a longitudinal opening in the form of a slot (4") and are attached directly on the outer face of the shell (2) of the container, being fixed for example by welding, and **in that** the parallel profiled structures (7) consist of a thickening of the edges (6, 6') of each plate-shaped element (5).

8. Closing device according to Claims 5 or 6, **characterised in that** the profiled elements (4, 4') consist of thickened parts or full sections attached or formed at the level of opposite edges of the opening (3), and **in that** the parallel profiled structures (7) consist of hollow sections, each having a longitudinal opening in the shape of a slot (4"), formed or attached on the respective edges (6, 6').

9. Closing device according to any of Claims 1 to 4, **characterised in that** the profiled element (4, 4') and the profiled structures (7) have hook-shaped cross-sections that can engage in one another, one of the hooks delimiting a groove (16) which receives the end of the other hook, the latter if necessary being provided with a thickened portion (17).

10. Closing device according to any of Claims 1 to 9, **characterised in that** each profiled element (4, 4') is connected to the shell (2) by a longitudinal connection element (8) such as a strip or elongated plate, and if necessary by at least one force-absorbing element (9) which extends in a plane essentially perpendicular to the longitudinal direction of the profiled element (4, 4') considered and is connected to the shell (2) over part of the circumference of the latter.

11. Closing device according to Claim 2 and any of Claims 4 to 10, **characterised in that** each plate-shaped element (5, 5') has on its outer face a device (11) which controls the deformation of its curvature, whose action on the said element (5, 5') brings about a relative displacement of its two opposite parallel edges (6 and 6').

12. Closing device according to Claim 11, **characterised in that** the deformation device (11) comprises a contact body (12) that can move perpendicularly to a plane tangential to the plate-shaped curved element (5, 5') concerned and is mounted in a supporting and guiding structure (13) applied against the said plate-shaped element (5, 5') by symmetrical force-absorbing elements (13) fixed on the element (5, 5') concerned near its opposite parallel lateral edges (6 and 6'), the said contact body (12) being attached to a handling element (12') which also enables the element (5, 5') concerned to move by sliding.

13. Closing device according to any of Claims 1 to 12, **characterised in that** the container has a cylindrical structure of circular cross-section, and its shell (2) and the plate-shaped curved elements (5, 5') are made of sheet metal, preferably stainless steel sheet, and **in that** the opening (3) is of essentially rectangular shape.

14. Closing device according to any of Claims 1 to 13, **characterised in that** it comprises a single plate-shaped element (5) made integrally.

15. Closing device according to any of Claims 1 to 13, **characterised in that** it comprises a single plate-shaped element (5) consisting of several adjacent sections of sheet metal connected to one another by flexible and preferably leakproof joints (14), for example in the form of strips of a flexible synthetic material.

16. Closing device according to any of Claims 1 to 13, **characterised in that** it comprises two independent plate-shaped curved elements (5 and 5'), whose mutually adjacent edges in the position where the opening (3) is closed can if necessary comprise sealing devices which, if necessary, co-operate mutually.

17. Container, in particular a pneumatic pressure vessel, **characterised in that** it comprises a closing device (1) according to any of Claims 1 to 16.

18. Container according to Claim 17, **characterised in that** the profiled elements (4, 4') are arranged offset relative to the opposed edges of the shell (2) that in part define the opening (3), the face of the edges (6, 6') of the plate-shaped element(s) (5, 5') located opposite the part of the shell (2') being provided with a sealing gasket (15), preferably inflatable, which extends all round the periphery of the element (5, 5') concerned.

19. Container according to Claim 17, **characterised in that** the profiled elements (4, 4') are arranged offset relative to the opposite edges of the shell (2) that in part define the opening (3), the part (2') of the shell that contains the said opening (3) being provided with a sealing gasket, preferably inflatable, which extends around the said opening (3).

20. Container according to Claim 18, **characterised in that** when the closing device (1) consists of two plate-shaped elements (5 and 5'), the opening (3) is provided with a central cross-member (18), for example with a T-shaped cross-section, which provides contact surfaces (19) for the adjacent sealing devices in the closing position of the elements (5 and 5'), for example in the form of portions of inflatable sealing gaskets (15).

## Patentansprüche

1. Verschlussvorrichtung für vorzugsweise zylinderförmige Behälter, umfassend mindestens einen Mantelteil mit einem gekrümmten bzw. gebogenen Querschnitt und eine in diesem Teil eingebrachte, durch die Verschlussvorrichtung zu verschließende Öffnung, wobei im Wesentlichen diese Vorrichtung (1) einerseits aus zwei geradlinigen und parallel zueinander verlaufenden Profilelementen (4 und 4') besteht, die zu beiden Seiten der Öffnung (3) bzw. im Bereich der Ränder derselben an der Außenseite des Mantels befestigt bzw. ausgebildet sind, und andererseits aus mindestens einem als Platte (5, 5') ausgebildeten Element, das eine Krümmung zeigt, die der des Teils (2') des Mantels (2), der die Öffnung (3) aufweist, nahe kommt, und das zwei einander gegenüberliegende Ränder (6 und 6') umfasst, die jeweils mit einer längslaufenden Profilstruktur (7) versehen sind, über deren Querschnitt sie in einen der Profilelemente (4, 4') eingehängt bzw. gehalten werden können und darin kontinuierlich verschiebbar sind, wobei diese Profilelemente (4, 4') auf diese Weise auf der gesamten Länge Verbindungsmittel und Gleitschienen für das bzw. die plattenförmigen Elemente (5, 5') bilden und dessen bzw. deren Führung zwischen einer die Öffnung (3) schließenden Stellung und einer diese Öffnung öffnenden bzw. freilegenden Stellung gewährleisten, wobei diese Verschlussvorrichtung (1) **dadurch gekennzeichnet ist, dass** das gebogene, als Platte (5, 5') ausgebildete Element unter Druck mindestens leicht verformbar ist und mindestens zwei, zwei unterschiedlichen Biegeradien entsprechende Zustände aufweisen kann, wobei der größere der beiden Biegeradien eine Verschiebung des betreffenden Elements (5, 5') zulässt und der kleinere der beiden Biegeradien eine Lagefixierung des betreffenden Elements (5, 5') gewährleistet, wobei der kleinere der beiden Biegeradien mindestens leicht größer ist als der Biegeradius des Teils (2') des Mantels, der die Öffnung (3) aufweist.

2. Verschlussvorrichtung nach Anspruch 1, **dadurch gekennzeichnet, dass** das Element bzw. jedes Element, das als Platte (5, 5') ausgebildet ist, spielfrei und unter Spannung in bzw. an den schienenförmigen Profilelementen (4 und 4') derart montiert ist, dass eine eine Vergrößerung seines Biegeradius bewirkende Verformung dieses Elements (5, 5') erforderlich ist, um seine Verschiebung zu ermöglichen, wobei das Element (5, 5') bei der Druckbeaufschlagung des Behälters im Wesentlichen nicht verformt wird.

3. Verschlussvorrichtung nach Anspruch 1, **dadurch gekennzeichnet, dass** das Element bzw. jedes Element, das als Platte (5, 5') ausgebildet ist, mit Spiel und frei verschiebbar in den schienenförmigen Profilelementen (4, 4') montiert ist, wobei die Druckbeaufschlagung des Behälters eine Verformung des bzw. der Elemente (5, 5') bewirkt, bei welcher dessen bzw. deren Biegeradius verringert wird und dessen bzw. deren Verschiebung relativ zu den Profilelementen (4 und 4') blockiert wird.

4. Verschlussvorrichtung nach einem der Ansprüche 1 bis 3, **dadurch gekennzeichnet, dass** die Verbindungen zwischen der längslaufenden Profilstruktur (7) und dem jeweiligen Profilelement (4, 4') derart ausgestaltet sind, dass die Absätze, die zwischen den Rändern der Öffnung (3) und den Rändern (6, 6') des bzw. der als Platte (5, 5') ausgebildeten Elemente, welche einander gegenüberliegen, entstehen, eine geringe Höhe aufweisen.

5. Verschlussvorrichtung nach einem der Ansprüche 1 bis 4, **dadurch gekennzeichnet, dass** jede verschiebliche Verbindung [Profilstruktur (7) / Profilelement (4, 4')] aus einer Verbindung des Typs Massivprofil bzw. ummanteltes Profil besteht, welches in einem mit einem Längsschlitz (4") versehenen Hohlprofil bzw. ummantelnden Profil verschieblich gelagert ist.

6. Verschlussvorrichtung nach Anspruch 5, **dadurch gekennzeichnet, dass** die Massivprofile, die einstückig mit dem plattenförmigen Element bzw. mit dem Mantel ausgebildet oder daran angeschweißt sind, in engem Flächenkontakt mit längslaufenden Abschnitten (10, 10') der Innenseiten der Hohlprofilwände sind, welche sich beiderseits ihrer jeweiligen Längsschlitze (4") erstrecken, wenn das betreffende als Platte (5, 5') ausgebildete Element seinen kleinsten Biegeradius aufweist.

7. Verschlussvorrichtung nach Anspruch 5 oder 6, **dadurch gekennzeichnet, dass** die Profilelemente (4 bzw. 4') aus Hohlprofilen bestehen, welche jeweils eine als Schlitz (4") ausgebildete längslaufende Öffnung aufweisen, und direkt an der Außenseite des Mantels (2) des Behälters angesetzt sind, an der sie beispielsweise durch Schweißen befestigt sind, und dass die parallelen Profilstrukturen (7) aus Verdickungen der Ränder (6, 6') eines jeden plattenförmigen Elements (5) bestehen.

8. Verschlussvorrichtung nach Anspruch 5 oder 6, **dadurch gekennzeichnet, dass** die Profilelemente (4, 4') aus Verdickungen bzw. Massivprofilen bestehen, die im Bereich von einander gegenüberliegenden Rändern der Öffnung (3) angesetzt bzw. ausgebildet sind, und dass die parallelen Profilstrukturen (7) aus Hohlprofilen bestehen, die jeweils eine als Schlitz (4") ausgebildete längslaufende Öffnung aufweisen und an den jeweiligen Rändern (6, 6') ausgebildet bzw. angesetzt sind.

9. Verschlussvorrichtung nach einem der Ansprüche 1 bis 4, **dadurch gekennzeichnet, dass** die Profilelemente (4, 4') und die Profilstrukturen (7) im Querschnitt die Form von Haken aufweisen, welche ineinander in Eingriff bringbar sind, wobei einer der Haken eine Nut (16) begrenzt, die das gegebenenfalls mit einer Verdickung (17) versehene Ende des anderen Hakens aufnimmt.

10. Verschlussvorrichtung nach einem der Ansprüche 1 bis 9, **dadurch gekennzeichnet, dass** jedes Profilelement (4, 4') über ein längslaufendes Verbindungselement (8), wie zum Beispiel ein längliches Band oder eine längliche Platte, und gegebenenfalls über mindestens ein die Kräfte aufnehmendes Teil (9) mit dem Mantel (2) verbunden ist, wobei dieses die Kräfte aufnehmende Teil sich in einer im Wesentlichen senkrecht zur Längsrichtung des in Betracht gezogenen Profilelements (4, 4') verlaufenden Ebene erstreckt, und auf einem Teil seines Umfangs mit dem Mantel (2) verbunden ist.

11. Verschlussvorrichtung nach Anspruch 2 und einem der Ansprüche 4 bis 10, **dadurch gekennzeichnet, dass** jedes als Platte (5, 5') ausgebildete Element an seiner Außenseite eine Vorrichtung (11) trägt, mit der seine Krümmung gesteuert verformt wird und deren Wirkung auf das Element (5, 5') darin besteht, dass seine beiden parallel verlaufenden, einander gegenüberliegenden Ränder (6 und 6') sich voneinander entfernen.

12. Verschlussvorrichtung nach Anspruch 11, **dadurch gekennzeichnet, dass** die Verformungsvorrichtung (11) ein Stützglied (12) umfasst, welches senkrecht zu einer Ebene verschiebbar ist, die das betreffende gebogene plattenförmige Element (5, 5') berührt, und in einer Stütz- und Führungsstruktur (13) montiert ist, die an dem plattenförmigen Element (5, 5') durch symmetrische Elemente (13) zur Aufnahme der Kräfte, die an dem betreffenden Element (5, 5') in der Nähe seiner seitlichen, parallelen, einander gegenüber liegenden Ränder (6 und 6') befestigt sind, in Anlage gebracht wird, wobei das Stützglied (12) einstückig mit einem Betätigungsglied (12') verbunden ist, das auch die Verschiebung des betreffenden Elements (5, 5') ermöglicht.

13. Verschlussvorrichtung nach einem der Ansprüche 1 bis 12, **dadurch gekennzeichnet, dass** der Behälter einen zylindrischen Aufbau mit einem kreisrunden Querschnitt aufweist, dass sein Mantel (2) und der bzw. die gebogenen, plattenförmigen Elemente (5, 5') aus einem Metallblech, vorzugsweise aus Edelstahlblech, hergestellt sind, und dass die Öffnung (3) eine im Wesentlichen rechteckige Form aufweist.

14. Verschlussvorrichtung nach einem der Ansprüche 1 bis 13, **dadurch gekennzeichnet, dass** sie ein einziges plattenförmiges Element (5) aufweist, welches einstückig ausgebildet ist.

15. Verschlussvorrichtung nach einem der Ansprüche 1 bis 13, **dadurch gekennzeichnet, dass** sie ein einziges plattenförmiges Element (5) aufweist, welches aus mehreren aneinander angrenzenden, aus Metallblech hergestellten Teilen besteht, die durch biegsame, vorzugsweise dichte, Verbindungen (14), beispielsweise in Form von aus einem flexiblen synthetischen Werkstoff bestehenden Bandabschnitten, untereinander verbunden sind.

16. Verschlussvorrichtung nach einem der Ansprüche 1 bis 13, **dadurch gekennzeichnet, dass** sie zwei als unabhängige gebogene Platten ausgebildete Elemente (5 und 5') aufweist, deren jeweils aneinander liegenden Ränder in der die Öffnung (3) verschließenden Stellung eventuell Dichtvorrichtungen aufweisen, welche gegebenenfalls zusammenwirken.

17. Behälter, insbesondere pneumatischer Kelterbottich, **dadurch gekennzeichnet, dass** er eine Verschlussvorrichtung(1) nach einem der Ansprüche 1 bis 16 umfasst.

18. Behälter nach Anspruch 17, **dadurch gekennzeichnet, dass** die Profilelemente (4, 4') mit Bezug auf die einander gegenüberliegenden Ränder des teilweise die Öffnung (3) begrenzenden Mantels (2) nach hinten versetzt sind, wobei die dem Mantelteil (2') gegenüber liegende Seite der Ränder (6, 6') des bzw. der als Platte (5, 5') ausgebildeten Elemente mit einer abdichtenden Verkleidung (15) versehen ist, die vorzugsweise aufblasbar ist und sich über den gesamten Umfang des betreffenden Elements (5, 5') erstreckt.

19. Behälter nach Anspruch 17, **dadurch gekennzeichnet, dass** die Profilelemente (4, 4') mit Bezug auf die einander gegenüber liegenden Ränder des teilweise die Öffnung (3) begrenzenden Mantels (2) nach hinten versetzt sind, wobei der die Öffnung (3) aufweisende Mantelteil (2') mit einer vorzugsweise aufblasbaren, abdichtenden Verkleidung versehen ist, die sich um die Öffnung (3) erstreckt.

20. Behälter nach Anspruch 18, **dadurch gekennzeichnet, dass**, wenn die Verschlussvorrichtung (1) aus zwei als Platte (5 und 5') ausgebildeten Elementen besteht, die Öffnung (3) mit einer mittig angeordneten Quertraverse (18) mit einem beispielsweise T-förmigen Querschnitt versehen ist, welche in verschlossener Stellung der Elemente (5 und 5') den aneinander grenzenden Dichtvorrichtungen Anlageflächen (19) bietet, in Form von aufblasbaren abdichtenden Verkleidungsabschnitten (15) zum Beispiel.
